Europäisches Patentamt

European Patent Office

Office européen des brevets

(19)

(11) Numéro de publication: **0 225 822**
**B1**

(12) **FASCICULE DE BREVET EUROPEEN**

(45) Date de publication du fascicule du brevet:
11.07.90

(51) Int. Cl.⁵: **H01G 4/38**

(21) Numéro de dépôt: 86402460.9

(22) Date de dépôt: 04.11.86

(54) **Condensateur multipiste.**

(30) Priorité: 05.11.85 FR 8516390

(43) Date de publication de la demande:
16.06.87 Bulletin 87/25

(45) Mention de la délivrance du brevet:
11.07.90 Bulletin 90/28

(84) Etats contractants désignés:
DE GB IT SE

(56) Documents cités:
EP-A- 0 017 556
GB-A- 509 701
GB-A- 759 026

(73) Titulaire: COMPAGNIE EUROPEENNE DE
COMPOSANTS ELECTRONIQUES LCC, 50, rue Jean
-Pierre Timbaud B.P. 301, F-92402 Courbevoie(FR)

(72) Inventeur: Mouries, Gérard, THOMSON-CSF
SCPI 19, avenue de Messine, F-75008 Paris(FR)
Inventeur: Terzulli, Gilles, THOMSON-CSF
SCPI 19, avenue de Messine, F-75008 Paris(FR)

(74) Mandataire: Guérin, Michel et al, THOMSON-CSF SCPI,
F-92045 PARIS LA DEFENSE CEDEX 67(FR)

## Description

La présente invention se rapporte aux condensateurs du type multipiste et notamment aux condensateurs bobinés.

Des condensateurs bobinés multipistes sont déjà connus, par exemple par le document GB-A 759 026 qui décrit des condensateurs du type comprenant au moins trois électrodes séparées par des feuilles d'un diélectrique. Ces électrodes et ces feuilles de diélectrique sont disposées et enroulées de manière à fournir plusieurs condensateurs individuels qui peuvent être associés en série pour former un condensateur équivalent supportant des tensions de service plus élevées qu'un condensateur classique de même encombrement.

Il est aussi connu par le document GB-A 509 701 de prévoir un film diélectrique avec une métallisation crénelée de façon à former des électrodes élémentaires, la crénelure permettant la formation d'une zone de résistivité élevée.

Il est connu que, lors des contrôles en fin de fabrication ou de l'utilisation de tels codensateurs, les défauts de diélectrique donnent lieu à des décharges locales en forme d'arcs, oxydant ou volatilisant localement les métallisations. Ces décharges sont utiles car elles restaurent ainsi l'isolement normal. Ce processus est appelé auto-cicatrisation.

Cependant, pour des condensateurs d'une certaine capacité, et des tensions supérieures à quelques centaines de volts, l'énergie disponible pour une de ces décharges locales est telle que le condensateur peut être au moins localement détruit. Ce risque est d'autant plus grand que l'énergie stockée dans un condensateur est proportionnelle au carré de la tension, ce qui aggrave le danger de destruction dans le cas des condensateurs à haute tension.

Pour pallier ces inconvénients, l'invention propose un condensateur multipiste obtenu par bobinage d'au moins deux films diélectriques métallisés et dont la métallisation d'au moins l'un de films est crénelée de façon à former des électrodes de condensateurs élémentaires. La crénelure sera utilisée pour la formation de zones fusibles servant à limiter le courant lors d'un claquage éventuel afin de réduire l'énergie mise en jeu dans le claquage et de restreindre ainsi la partie de métallisation volatilisée. Dans la plupart des cas, la zone fusible sera préservée après avoir joué son rôle de limitateur de courant. La perte de capacité lors de l'utilisation du condensateur sera alors minimum.

L'invention a donc pour objet un condensateur multipiste du type où la capacité du condensateur est obtenue par la mise en série interne d'au moins deux condensateurs individuels, le condensateur étant réalisé par bobinage d'au moins deux films diélectriques métallisés, les métallisations comprenant des zones destinées à assurer l'effet capacitif et des zones de liaison destinées à assurer la mise en série interne ou les liaisons électriques avec les connexions externes du condensateur, caractérisé en ce que la métallisation d'au moins l'un des films est crénelée de façon à former des électrodes de condensateurs élémentaires, la crénelure permettant également la formation d'au moins une zone fusible par série de condensateurs élémentaires, les zones des métallisations destinées à assurer l'effet capacitif étant des zones dites à résistivité élevée par rapport aux zones de liaison qui sont des zones dites à faible résistivité, les différences de résistivité entre les différentes zones étant dues à des différences d'épaisseur de ces zones.

La crénelure sera avantageusement obtenue à partir de bandes démétallisées transversales et longitudinales auxdits films.

L'espace séparant deux bandes démétallisées peut être mis à profit pour créer les zones fusibles, par exemple l'espace séparant deux bandes longitudinales successives.

Pour éviter les détériorations dues à l'effet Corona, les métallisations peuvent être constituées de zones de résistivités différentes. Les zones destinées à assurer l'effet capacitif seront des zones dites à résistivité élevée par rapport aux zones de liaison qui seront qualifiées de zones à faible résistivité. Ces différences de résistivité entre les différentes zones métallisées peuvent être dues à des différences d'épaisseur de ces zones.

L'invention sera mieux comprise et d'autres avantages apparaîtront au moyen de la description qui va suivre et des figures annexées parmi lesquelles:

— les figures 1 et 2 représentent des vues de dessus et en coupe de films diélectriques métallisés pour un condensateur multipiste selon l'art connu,

— les figures 3 et 4 représentent des vues de dessus et en coupe de films diélectriques métallisés pour un condensateur multipiste,

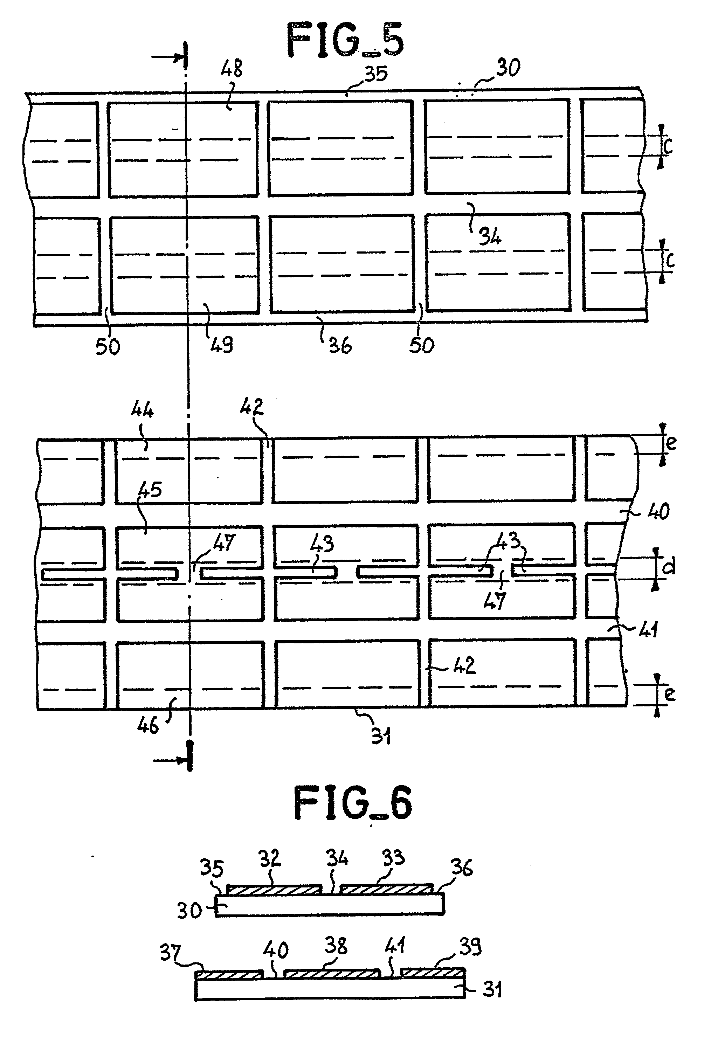

— le figures 5 à 8 représentent des vues utiles pour expliquer l'invention,

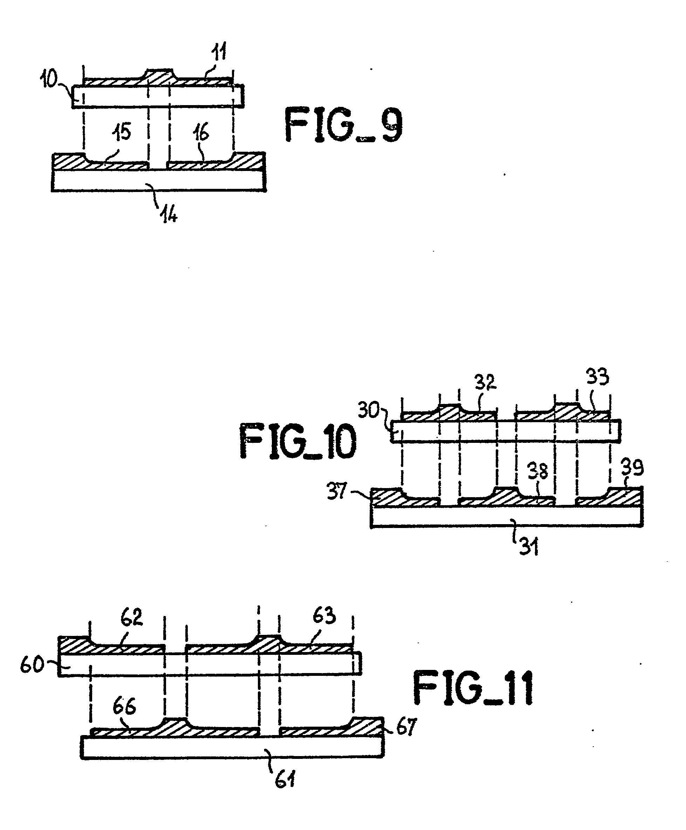

— les figures 9 à 11 représentent des vues en coupe de films diélectriques métallisés avec des métallisations renforcées, selon l'invention,

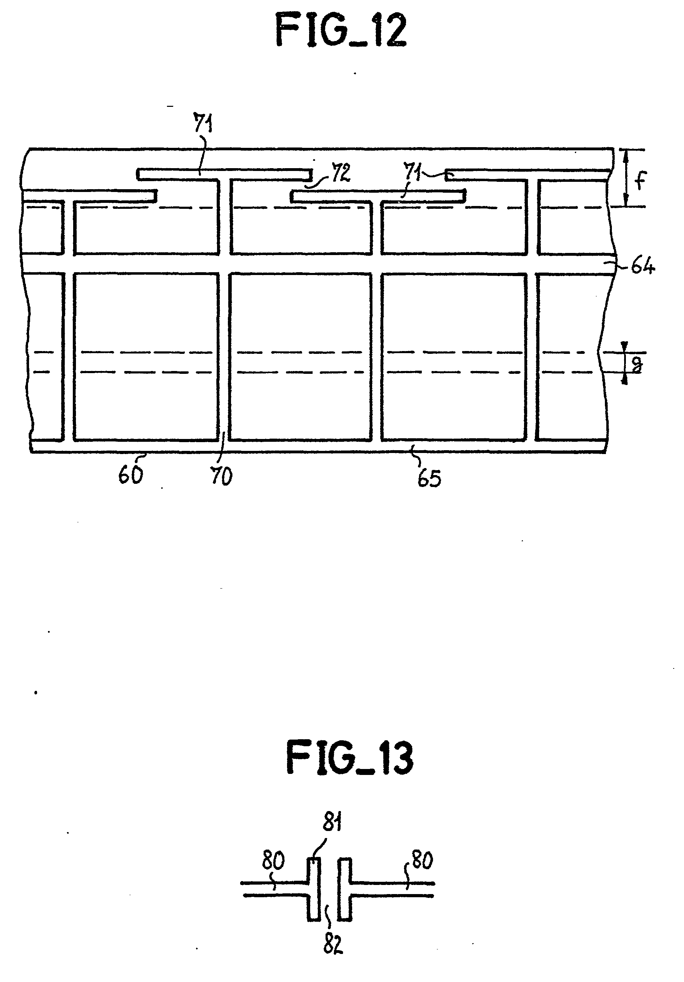

— la figure 12 représente une vue de dessus d'un film diélectrique métallisé pour un condensateur selon l'invention et possédant une zone fusible améliorée,

— la figure 13 représente une variante de la zone fusible.

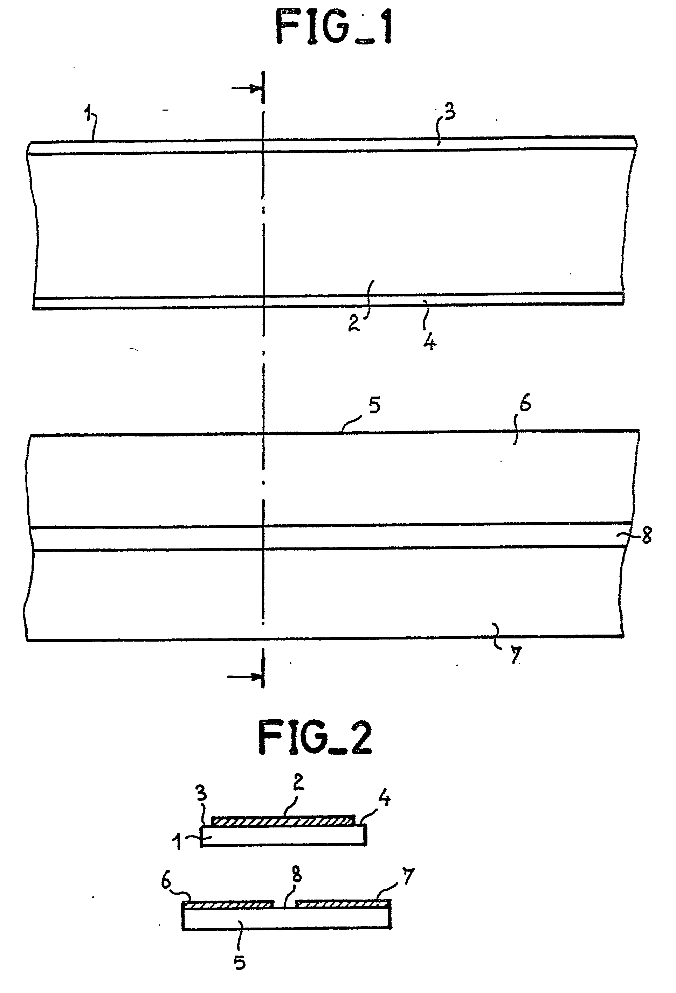

Les figures 1 et 2 sont des vues de films diélectriques métallisés utilisés pour obtenir par bobinage un condensateur multipiste selon l'art connu. Dans le cas représenté, il s'agit d'un condensateur du type deux pistes. La figure 1 est une vue de dessus des films que l'on a représentés côte à côte pour faciliter la compréhension. Sur la figure 2, ces films sont vus en coupe et sont placés l'un au-dessus de l'autre. Le diélectrique employé peut être un matériau fibreux tel le papier ou un matériau synthétique (polypropylène, polyester, etc...). Les métallisations peuvent être des dépôts de zinc, d'aluminium, d'un autre métal ou d'un alliage. Le film 1 supporte une métallisation uniforme 2 à l'exception des marges 3 et 4. La métallisation du film 5 est constituée de deux bandes parallèles 6 et 7 séparées par une zone non métallisée ou démétallisée 8. Elle est effectuée jusqu'aux bords du film 5. Le film 1 est moins large que le film 5 afin que, après bobinage, le "shoopage" (réalisation des connexions externes du condensateur par métallisation de ses faces latérales d'après la terminologie en usage chez l'homme de l'art) puisse être efficacement réalisé. Les marges 3 et 4 sont nécessaires pour éviter d'éventuels courts-circuits lors du "shoopage". La figure 2 permet de voir le positionnement relatif des deux films avant bobinage. Après bobinage, ils seront serrés l'un contre l'autre. On obtiendra donc deux condensateurs individuels: l'un entre l'électrode 6 et l'électrode 2, l'autre entre l'électrode 2 et l'électrode 7, dont la valeur dépendra de l'importance des surfaces en vis-à-vis. Ces condensateurs individuels sont disposés en série grâce à la liaison électrique assurée par la zone centrale de l'électrode 2.

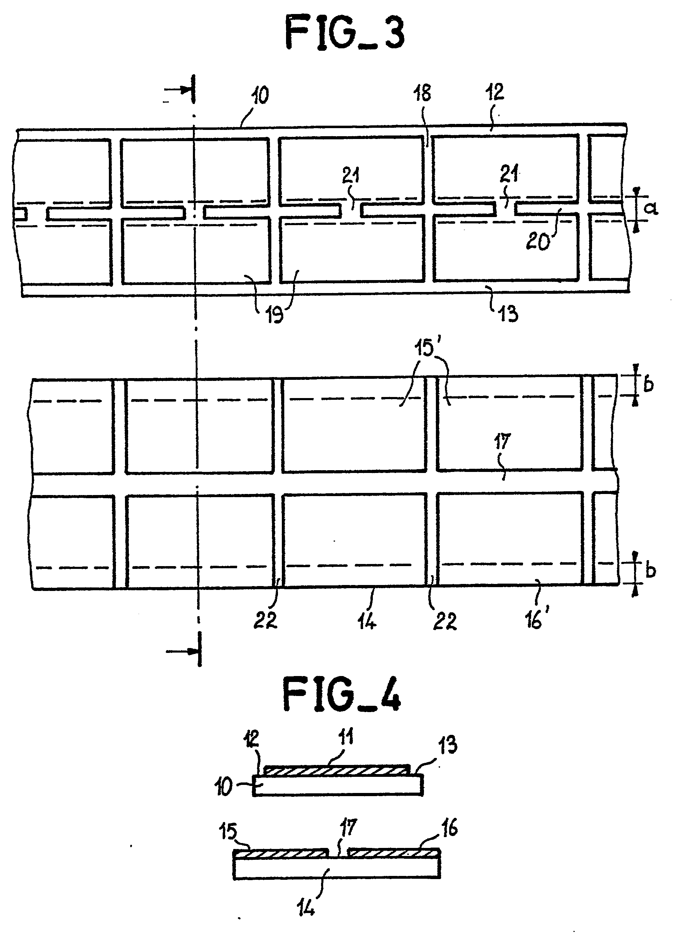

Les figures 3 et 4 représentent les films métallisés d'un condensateur à deux pistes. La figure 4 en particulier montre bien, par comparaison avec la figure 2, qu'il s'agit effectivement de films destinés à la réalisation d'un condensateur deux pistes. Le film diélectrique 10 supporte une métallisation 11 laissant subsister des marges 12 et 13. Le film diélectrique 14 supporte des métallisations 15 et 16 séparées par une zone non métallisée ou démétallisée 17. Les matériaux utilisés pour les films et les métallisations peuvent être ceux déjà cités. Les techniques de dépôt de métallisations sur des films diélectriques sont bien connus de l'homme de l'art. La métallisation 11 du film 10 est crénelée pour obtenir des électrodes de condensateurs élémentaires et pour leur adjoindre une zone fusible. La crénelure est par exemple réalisée sous la forme d'une succession de croix. La branche transversale 18 de la croix réunit les deux marges 12 et 13 pour créer les électrodes élémentaires 19. La branche longitudinale 20 de la croix délimite une largeur restreinte 21 de métallisation pour créer une zone fusible. D'autres configurations de crénelure sont bien sûr possibles. La zone fusible peut ne pas être située au centre de l'électrode 19. Elle peut être située vers l'un des bords de cette électrode, par exemple entre l'extrémité de la bande démétallisée 20 et la bande démétallisée 18. La crénelure peut être réalisée de différentes façons: par voie chimique, par étincelage ou par masquage lors de la métallisation du film ou mieux par ablation à l'aide d'un faisceau laser. Cette dernière méthode présente l'avantage de ne pas dégrader les propriétés locales de tenue en haute tension grâce non seulement à une bonne régularité géométrique de la zone mise à nu, mais aussi à la propreté du procédé à l'endroit des contours de la métallisation restante. Cette solution a été décrite notamment dans le brevet français 2 453 482.

On peut procéder à l'aide d'un faisceau d'énergie pulsée. Chaque pulse d'énergie volatilise un cercle de métallisation dont le diamètre peut être réglé entre 0,1 et 2 mm. Un balayage optique permet de créer une succession de cercles sécants pour l'obtention d'un trait démétallisé continu. La métallisation peut se trouver sur le ruban ou sous le ruban diélectrique par rapport au rayon laser. Quelles que soient les positions respectives de la métallisation et du rayon laser, il est préférable de choisir la longueur d'onde du rayon laser dans une gamme qui correspond à la zone de transparence du ruban afin d'éviter son échauffement. Un compromis entre la puissance du laser, la fréquence des pulses d'énergie et la vitesse de balayage est à rechercher pour effectuer la démétallisation sans brûler le ruban diélectrique ce qui entraînerait des claquages intempestifs lors de l'utilisation des condensateurs. Dans le cas de la figure 3, il peut être avantageux d'utiliser deux faisceaux laser, à raison d'un faisceau par branche de la croix. Il peut être judicieux d'incliner la branche transversale de la croix pour des raisons pratiques de réalisation.

Comme cela est représenté sur la figure 3, les bandes métallisées 15 et 16 peuvent être aussi découpées en électrodes 15' et 16' de condensateurs élémentaires, en correspondance avec les électrodes 19. Les bandes démétallisées 22 peuvent être perpendiculaires aux bords du film 14 ou inclinées en fonction des bandes démétallisées 18.

Après bobinage et "shoopage", on obtient un condensateur du type deux pistes, chaque condensateur individuel étant formé d'une pluralité de condensateurs élémentaires possédant une zone fusible et associés en parallèle.

Il entre dans le cadre de l'invention d'appliquer la crénelure au cas d'un nombre de pistes supérieur à deux.

Les figures 5 et 6 représentent également des films métallisés, mais pour un condensateur à quatre pistes. Le film diélectrique 30, de largeur plus petite que le film 31, supporte deux bandes métallisées 32 et 33 séparées par une bande non métallisée ou démétallisée 34. Des marges 35 et 36 sont également prévues. Le film 31 supporte trois bandes métallisées 37, 38 et 39 séparées par les bandes non métallisées ou démétallisées 40 et 41. En examinant la figure 6, on constate l'existence de quatre condensateurs en série: le premier entre les bandes 37 et 32, le second entre les bandes 32 et 38, le troisième entre les bandes 38 et 33 et le quatrième entre les bandes 33 et 39. Les métallisations 37, 38 et 39 du film 31 sont crénelées par des bandes transversales 42 perpendiculaire aux bords du film 31 dans le cas de la figure 5, mais qui peuvent être inclinées par rapport à ces bords. Des découpes longitudinales 43 permettent de constituer des zones fusibles. La crénelure permet la création d'électrodes référencées 44, 45 et 46 dans le sens transversal du film 31. C'est l'électrode intermédiaire 45 qui a été choisie pour comporter la zone fusible 47. On peut cependant concevoir la zone fusible sur une autre électrode: sur l'électrode 44 ou 46 ou encore sur l'électrode 48 ou 49 si les métallisations 32 et 33 du film 30 sont également divisées en électrodes de condensateurs élémentaires par des découpes 50. Pour des raisons de mise en œuvre, on peut se limiter à ne pratiquer qu'une seule zone fusible par série de condensateurs élémentaires.

Ce principe de crénelure est applicable à tous les condensateurs multipistes à nombre pair de pistes. Dans le cas d'un nombre impair de pistes, les films métallisés peuvent être identiques, mais les motifs sont inversés au bobinage.

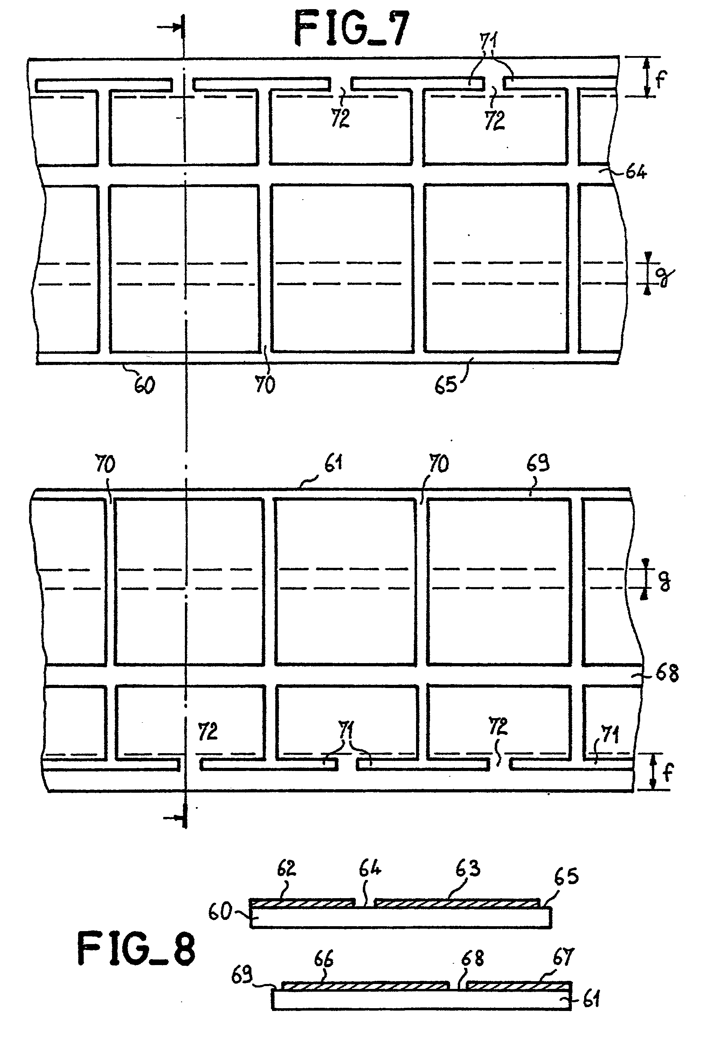

Les figures 7 et 8 représentent des films métallisés pour un condensateur à trois pistes. Les films diélectriques 60 et 61 sont de largeurs égales et seront bobinés décalés comme l'indique la figure 8. Le film 60 supporte deux bandes métallisées 62 et 63 séparées par une bande démétallisée ou non métallisée 64. Il possède également une marge non métallisée 65. De façon réciproque, le film 61 supporte les bandes métallisées 66 et 67 séparées par une bande 68 dépourvue de métallisation. Il possède également une marge non métallisée 69. Une crénelure a été effectuée sur les métallisations de l'un des films ou identiquement sur les deux comme le montre la figure 7. Elle consiste en des bandes démétallisées transversales 70 (perpendiculaires aux bords des films ou inclinées) et longitudinales 71. Ces dernières permettent de constituer des zones fusibles 72. En examinant la figure 8, on constate l'existence de trois condensateurs en série: le premier entre les bandes 62 et 66, le second entre les bandes 66 et 63 et le troisième entre les bandes 63 et 67. Si les films métallisés sont identiques, comme c'est le cas pour la figure 7, on dispose de deux zones fusibles par série de trois condensateurs élémentaires. Il est possible de n'en disposer que d'un, par exemple en ne pratiquant pas de découpes longitudinales sur l'un des films.

Les condensateurs bobinés multipistes présentent un inconvénient sérieux constitué par la disposition même des électrodes qui induisent des points faibles amenant, par effet Corona, un risque de détérioration de ces condensateurs. Dans le cas du condensateur multipiste de l'art connu représenté figures 1 et 2, la métallisation 2 est à résistivité élevée afin d'assurer une autocicatrisation satisfaisante, les métallisations 6 et 7 sont à faible résistivité pour assurer une bonne liaison électrique avec les "shoopages". La bande 8 dépourvue de métallisation crée, quand le condensateur est en fonctionnement, un effet de bord contribuant à l'usure, par effet Corona, de la zone centrale de la métallisation 2 à cause de sa résistivité élevée. Il y a alors risque de détérioration du condensateur par emballement thermique de la zone centrale.

C'est un autre aspect de l'invention que de remédier à cet inconvénient. L'invention prévoit qu'une même métallisation puisse avoir des zones de résistivités différentes: une zone à résistivité dite élevée et une zone dite à faible résistivité. En pratique, il suffira de disposer d'un rapport d'environ quatre entre les valeurs de ces résistivités. Dans le cas du condensateur à deux pistes tel que décrit par les figures 3 et 4, il est avantageux que la zone centrale de la métallisation 11 soit de résistivité plus faible que le reste de cette métallisation. Cette zone centrale a est délimitée, figure 3, par des traits interrompus. Pour assurer un "shoopage" efficace, les bords extérieurs des métallisations 15 et 16 auront aussi une faible résistivité. Figure 3, on a délimité ce bords sous la référence b. En dehors des zones b, les métallisations 15 et 16 seront donc dites à résistivité élevée.

Les parties de métallisations à résistivité élevée assureront une auto-cicatrisation satisfaisante. Les parties de métallisations à faible résistivité assureront soit une bonne liaison électrique par "shoopage", soit éviteront l'usure par effet Corona.

Pour les mêmes raisons, les parties de métallisations référencées c, d et e sur la figure 5 et référencées f et g sur la figure 7 seront à faible résistivité.

Plusieurs solutions sont possibles pour disposer de métallisations de différentes résistivités. On peut par exemple effectuer des dépôts d'épaisseur variable selon la section du film. La figure 9 reprend le cas du condensateur deux pistes de la figure 4. On distingue sur la figure 9 des parties de métallisations plus épaisses que d'autres qui correspondent à des absences de métallisation sur le film en vis-à-vis.

La figure 10 reprend le cas du condensateur quatre pistes de la figure 6. La figure 11 reprend le cas du condensateur trois pistes de la figure 8.

L'utilisation de métallisations à zones de résistivités différentes permet de réaliser des condensateurs haute tension pouvant être soumis à de fortes contraintes en courant impulsionnel. Ils peuvent donc être employés dans des dispositifs utilisant l'effet laser.

L'utilisation de zones à faible résistivité peut cependant avoir un effet indésirable sur les zones fusibles. En effet, comme on le constate d'après les figures 3, 5 et 7, les zones fusibles peuvent se trouver justement dans des zones à faible résistivité et risquent de ne plus jouer correctement leur rôle de fusible. On peut augmenter la résistance du fusible en diminuant encore sa largeur, mais on ne peut aller au-delà d'une certaine limite. On ne peut en même temps avoir un tracé rapide du rayon laser de démétallisation et une grande précision géométrique de ce tracé. On peut alors avoir recours à diverses astuces.

La figure 12 est une variante de l'un des films de la figure 7. En décalant les bandes démétallisées longitudinales 71 l'une par rapport à l'autre, il est relativement aisé d'obtenir des zones fusibles de largeur déterminée. Les deux types de découpes 71 peuvent être effectués à partir de deux lasers dont les postions relatives sont bien déterminées.

Une autre solution possible est représentée figure 13 où deux bandes démétallisées 80 sont terminées par deux découpes transversales 81 qui leur sont perpendiculaires ou inclinées et dont l'intervalle peut être plus aisément déterminé que la distance séparant la fin d'une bande démétallisée au début d'une autre bande.

La crénelure des condensateurs multipistes améliore l'auto-cicatrisation et permet pratiquement de doubler les gradients de tension sur le film. Pratiquement, on peut passer d'un gradient de 50 V/μm à un gradient de 100 V/μm soit une réduction de volume d'environ 4 fois.

**Revendications**

1. Condensateur multipiste du type où la capacité du condensateur est obtenue par la mise en série interne d'au moins deux condensateurs individuels, le condensateur étant réalisé par bobinage d'au moins deux films diélectriques métallisés (10, 14), les métallisations (11, 15, 16) comprenant des zones destinées à assurer l'effet capacitif et des zones de liaison destinées à assurer la mise en série interne ou les liaisons électriques avec les connexions externes du condensateur, caractérisé en ce que la métallisation d'au moins l'un des films est crénelée de façon à former des électrodes de condensateurs élémentaires, la crénelure permettant également la formation d'au moins une zone fusible par série de condensateurs élémentaires, les zones des métallisations destinées à assurer l'effet_capacitif étant des zones dites à résistivité élevée par rapport aux zones de liaison qui sont des zones dites à faible résistivité, les différences de résistivité entre les différentes zones étant dues à des différences d'épaisseur de ces zones.

2. Condensateur multipiste selon la revendication 1, caractérisé en ce que la crénelure est obtenue à partir de bandes démétallisées transversales et longitudinales auxdits films (10, 14, 30, 31, 60, 61).

3. Condensateur multipiste selon la revendication 2, caractérisé en ce que la zone fusible est déterminée par l'espace séparant deux bandes démétallisées.

4. Condensateur multipiste selon la revendication 3, caractérisé en ce que la zone fusible est déterminée par l'espace séparant deux bandes longitudinales successives.

5. Condensateur multipiste selon la revendication 4, caractérisé en ce que lesdites bandes longitudinales (71) créant une même zone fusible (72) sont décalées l'une par rapport à l'autre.

6. Condensateur multipiste selon la revendication 4, caractérisé en ce que la zone fusible (82) est comprise entre deux découpes (81) terminant transversalement les deux bandes longitudinales successives (80).

**Claims**

1. A multi-track capacitor of the type wherein the capacitance of the capacitor is obtained by internally connecting at least two individual capacitors in series, the capacitor being implemented by winding up at least two metallized dielectric films (10, 14), the metallizations (11, 15, 16) comprising zones intended to ensure the capacitor effect and connection zones intended to ensure the internal series-connection or else the electrical connection with the external terminals of the capacitor, characterized in that the metallization of at least one of the films is crenel-shaped so as to form elementary capacitor electrodes, the crenel-shape permitting also the formation of at least one meltable zone for each series of elementary capacitors, the metallization zones intended to ensure the capacitor effect being zones referred to as zones of elevated resistivity in relation to the linking zones, which are zones referred to as zones of low resistivity, the difference of resistivity between the different zones being due to differences in the thickness of these zones.

2. A multi-track capacitor according to claim 1, characterized in that crenel-shape is obtained from demetallized strips disposed transversely and longitudinally to said films (10, 14, 31, 60, 61).

3. A multi-track capacitor according to claim 2, characterized in that the meltable zone is defined by the space separating two demetallized strips.

4. A multi-track capacitor according to claim 3, characterized in that the meltable zone is defined by the space separating two successive longitudinal strips.

5. A multi-track capacitor according to claim 4, characterized in that said longitudinal strips (71) creating a same meltable zone (72) are shifted relatively to one another.

6. A multi-track capacitor according to claim 4, characterized in that the meltable zone (82) is comprised between two cutout portions (81) transversally terminating the two successive longitudinal strips (80).

**Patentansprüche**

1. Mehrbahniger Kondensator, bei dem die Kapazität durch interne Serienschaltung mindestens zweier einzelner Kondensatoren erhalten wird, wobei der Kondensator durch Wickeln mindestens zweier dielektrischer metallisierter Folien (10, 14) gebildet wird und die Metallisierungen (11, 15, 16) Zonen aufweisen, die zur Sicherung der kapazitiven Wirkung bestimmt sind, sowie Verbindungszonen, welche die interne Serienschaltung oder die elektrischen Verbindungen mit den Außenanschlüssen des Kondensators herstellen, dadurch gekennzeichnet, daß die Metallisierung mindestens einer Folie gezackt sind, derart, daß Elektroden von Elementarkondensatoren gebildet werden, wobei die Auszackung außerdem die Bildung mindestens einer schmelzbaren Zone pro Serie von Elementarkondensatoren ermöglicht und es sich bei den den kapazitiven Effekt sicherstellenden metallisierten Zonen um Zonen mit erhöhtem spezifischen Widerstand im Verhältnis zu den Verbindungszonen handelt, welche Zonen mit geringem spezifischen Widerstand bilden, wobei die Unterschiede des spezifischen Widerstandes zwischen den verschiedenen Zonen sind durch Unterschiede in der Dicke dieser Zonen bedingt sind.

2. Mehrbahniger Kondensator nach Anspruch 1, dadurch gekennzeichnet, daß die Auszackungen durch entmetallisierte Bänder gebildet sind, die quer und längs zu den Folien (10, 14, 30, 31, 60, 61) verlaufen.

3. Mehrbahniger Kondensator nach Anspruch 2, dadurch gekennzeichnet, daß die schmelzbare Zone durch den Raum zwischen den beiden entmetallisierten Bändern bestimmt ist.

4. Mehrbahniger Kondensator nach Anspruch 3, dadurch gekennzeichnet, daß die schmelzbare Zone durch den zwei aufeinanderfolgende Längsbänder trennenden Raum bestimmt ist.

5. Mehrbahniger Kondensator nach Anspruch 4, dadurch gekennzeichnet, daß die eine schmelzbare Zone (72) bildenden Längsbänder (71) gegeneinander versetzt sind.

6. Mehrbahniger Kondensator nach Anspruch 4, dadurch gekennzeichnet, daß die schmelzbare Zone (82) sich zwischen zwei Abschnitten (81) befindet, die in Querrichtung die beiden Längsbänder beenden.

EP 0 225 822 B1

FIG_1

FIG_2

# FIG_3

# FIG_4

# FIG_5

# FIG_6

# FIG_7

# FIG_8

FIG_9

FIG_10

FIG_11

# FIG_12

# FIG_13